(19) Europäisches Patentamt
European Patent Office
Office européen des brevets

(11) Veröffentlichungsnummer : **0 064 697**
**B1**

(12) # EUROPÄISCHE PATENTSCHRIFT

(45) Veröffentlichungstag der Patentschrift : **30.07.86**

(51) Int. Cl.⁴ : **C 08 L 27/06**

(21) Anmeldenummer : **82103713.2**

(22) Anmeldetag : **30.04.82**

(54) **Gleitmittel für die formgebende Verarbeitung von Polyvinylchlorid, die veresterte oligomere mehrwertige Alkohole enthalten.**

(30) Priorität : **09.05.81 DE 3118417**

(43) Veröffentlichungstag der Anmeldung : **17.11.82 Patentblatt 82/46**

(45) Bekanntmachung des Hinweises auf die Patenterteilung : **30.07.86 Patentblatt 86/31**

(84) Benannte Vertragsstaaten : **BE CH DE FR IT LI NL**

(56) Entgegenhaltungen :
**FR-A- 1 395 393**
**GB-A- 817 041**

(73) Patentinhaber : **BASF Aktiengesellschaft**
**Carl-Bosch-Strasse 38**
**D-6700 Ludwigshafen (DE)**

(72) Erfinder : **Helfert, Herbert, Dr.**
**Albrecht-Duerer-Ring 25**
**D-6710 Frankenthal (DE)**
Erfinder : **Balzer, Wolf-Dieter, Dr.**
**Bruesseler Ring 34**
**D-6700 Ludwigshafen (DE)**
Erfinder : **Hatzmann, Guenter, Dr.**
**Joh.-Seb.-Bach-Strasse 4**
**D-6906 Leimen (DE)**
Erfinder : **Dietsche; Wolfram, Dr.**
**Albrecht-Duerer-Ring 34B**
**D-6710 Frankenthal (DE)**
Erfinder : **Hettche, Albert, Dr.**
**Kleiststrasse 12**
**D-6711 Hessheim (DE)**
Erfinder : **Weiss, Stefan, Dr.**
**Carl-Beck-Strasse 46**
**D-6903 Neckargemuend (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft neue Gleitmittel für die formgebende Verarbeitung von Polyvinylchlorid (PVC), die bestimmte mit langkettigen Fettsäuren veresterte oligomere mehrwertige Alkohole enthalten, und die sich vor allem durch eine starke äußere Gleitwirkung auszeichnen. Die formgebende Bearbeitung umfaßt sowohl die Extrusions- als auch die Kalandrier- und Spritzgußverarbeitung.

Für diese Zwecke verwendete man bisher in erster Linie Ester lankettiger aliphatischer Carbonsäuren (Montansäuren) mit di- oder trifunktionellen Alkoholen (z. B. Glycol oder Glycerin). Diese Mittel sind z. B. aus der DE-AS 1 907 768 bekannt.

Aus der FR-A-1 395 393 sind Ester von Polyglycerin mit organischen Säuren, beispielsweise Fettsäuren oder Benzolsäure, als mit PVC verträgliche Komponenten zum Zwecke der antistatischen Ausrüstung von PVC bekannt. Ebenso geht aus der GB-A-817 041 die Verwendung von Polyglycerinester ein- oder zweibasischer Säuren als Fließhilfsmittel und Antistatikum hervor. In beiden Fällen wird empfohlen, den zu verwendenden Zusammensetzungen u. a. Gleitmittel zuzusetzen. Eine Verwendung dieser Polyglycerinfettsäureester als äußere Gleitmittel hat daraus nicht nahegelegen.

Die Vielschichtigkeit der Anforderungen an ein wirksames PVC-Gleitmittel soll anhand der Kalandrierverarbeitung von Art-PVC aufgezeigt werden.

Bei einigen Kalandrierverfahren (s. vor allem « Kunststoffe » 68 (1978), 9) wird hochmolekulares Emulsions-PVC unter Zusatz relativ großer Mengen an Gleitmitteln (ca. 3 bis 4 phr = « parts per hundred parts resin ») über einen Schmelzextruder bei Temperaturen unterhalb des Aufschmelzbereichs des PVC zu einer Folie ausgewalzt und diese Folie durch kurzzeitiges Erwärmen auf Temperaturen über 200 °C durchgeschmolzen. Zum Abschluß werden die Folien noch gereckt, um die nötige mechanische Festigkeit zu erlangen.

Elektronenmikroskopische Aufnahmen haben gezeigt, daß bei der Ausformung des PVC auf dem Kalander die PVC-Teilchen nur durch eine Matrix aus Gleitmittel und Emulgator zusammengehalten werden. Durch kurzzeitigen Temperaturstoß werden dann die Teilchen quantitativ aufgeschmolzen, so daß eine homogene, transparente Phase gebildet wird.

Die Gleitmittel hierzu bildeten vor allem die eingangs erwähnten Glycolmontanate, die zwar schon ausgezeichnete Ergebnisse erbrachten, jedoch nicht allen Anforderungen optimal entsprachen.

Die Anforderungen sind folgende :

1. Das Gleitmittel muß eine gewisse Unverträglichkeit mit dem PVC besitzen, die aber nicht zu weit gehen darf, weil sonst die erwähnte Matrix aus PVC-Teilchen, Gleitmittel und Emulgator nicht genügend zusammenhält.

2. Nach der kurzzeitigen Hochtemperaturbelastung muß das Gleitmittel mit dem PVC eine entsprechend der Schichtdicke der Folien (ca. 40 bis 100 µm) genügende Transparenz aufweisen, und die mechanische Festigkeit der Folie darf nicht beeinträchtigt werden.

3. Das Gleitmittel darf keinen Belag auf den Walzen verursachen.

4. Verarbeitungstechnisch muß die Fellbildung auf der Kalandrierwalze ohne zeitliche Verzögerung erfolgen, und das Produkt muß selbstverständlich hitzestabil sein.

5. Insbesondere darf die nach dem Recken gebildete Folie weder Löcher noch Streifen aufweisen und muß sich durch einen genügend hohen Glanz auszeichnen. Insbesondere die letzteren Eigenschaften sind bisher mit den Montanesterwachsen noch nicht optimal erreicht worden.

Eine weitere Anwendungsmöglichkeit liegt in der Herstellung von Blasfolien nach dem Extrusionsverfahren. Hierbei werden die äußeren Gleitmittel in einer wesentlich niedrigeren Konzentration eingesetzt.

Wesentlich für die Beurteilung des Gleitmittels ist auch hier die Folienqualität, wie Transparenz, Glanz, Streifenbildung, Oberflächenstruktur sowie die dem Extruder zuzuordnenden Maschinendaten, wie Drehmomente etc.

Das Ziel der Erfindung bestand darin, Gleitmittel aufzufinden, die möglichst allen diesen Anforderungen und nicht nur einem Teil derselben entsprechen.

Dieses Ziel wurde mit Gleitmitteln und mit der Verwendung von Gleitmitteln erreicht, wie sie gemäß den Patentansprüchen definiert sind.

Es handelt sich somit um Oligomere des Glycerins, Trimethylolpropans und Pentaerythrits, die gemischt oder blockweise, sowie gegebenenfalls für sich allein oligomerisiert vorliegen.

Die unveresterten Oligomeren können auf verschiedene Weise erhalten werden. Man kondensiert die Ausgangsalkohole in basischem Medium bei erhöhter Temperatur, wobei Mischkondensate erhalten werden, sofern nicht ein einzelner Alkohol allein eingesetzt wird — in diesem Fall erhält man einheitliche Kondensationsprodukte. Man kann aber auch einen monomeren oder schon oligomeren Alkohol mit einem epoxidierten mehrwertigen Alkohol, wie Glycidol umsetzen und erhält dann ebenfalls die Oligomeren — in diesem Fall als Blöcke.

Die Kondensations- bzw. Additionsprodukte werden anschließend mit $C_{16}$ bis $C_{34}$-aliphatischen Fettsäuren oder Gemischen davon pro Anzahl der OH-Gruppen zu 50 bis 80 % in an sich bekannter Weise verestert. Als Fettsäuren kommen alle in diesem Rahmen möglichen in Betracht, wie Erucasäure, Palmitinsäure, Stearinsäure, Ölsäure, Laurinsäure, Montansäure, natürlich vorkommende Gemische wie Talgfettsäure, Cocosfettsäure oder deren Gemische.

Hierbei ist zusätzlich von Vorteil, wenn möglichst keine Restcarbonsäure im Molekül mehr nachweisbar ist.

Die DE-AS 25 11 807 beschreibt die Herstellung von Glycerin- oder Polyglycerinestern aus aliphatischen Monocarbonsäuren mit 5 bis 8 C-Atomen. Diese sind lediglich als Weichmacher für PVC brauchbar.

Die BE-PS 750 055 beschreibt, ähnlich wie die eingangs erwähnte DE-AS 19 07 768 Montansäureester des monomeren Glycerins als Gleitmittel. Diese Produkte kleben aber zu früh an den Walzen an, d. h. die Gleitwirkung reicht nicht aus.

Die erfindungsgemäß zu verwendenden Produkte eignen sich insbesondere für die Herstellung sehr dünner Folien mit hohem Glanz und hoher Festigkeit.

Sie lassen sich am Extruder und am Kalander gut verarbeiten, kleben nicht und führen zu löcher- und streifenfreien Folien ohne Belagsbildung im Extruder oder auf den Walzen.

Die nun folgenden Beispiele erläutern die Erfindung.

## Beispiele

A) Allgemeine Methodik

Die Herstellung der Polyhydroxyverbindungen ist nicht Bestandteil der Erfindung. Sie werden nach bekannten Methoden hergestellt. So werden die Polyhydroxyverbindungen, ersichtlich aus Tabelle 1, beispielsweise aus Trimethylolpropan und Glycidol (2,3-Epoxypropanol) mittels basischer Katalysatoren wie z. B. KOH bei 90-130 °C, bevorzugt 100-110 °C unter Stickstoffatmosphäre hergestellt.

Die aus der Tabelle 2 ersichtlichen Polyglycerine werden entweder aus Glycerin + nMol Glycidol oder durch Selbstkondensation von Glycerin in Gegenwart von Katalysatoren (z. B. Natriumacetat) hergestellt.

Die aus Tabelle 3 ersichtlichen Polyhydroxyverbindungen erhält man wieder durch Kondensation von Trimethylolpropan-Pentaerythrit-Gemischen in Gegenwart von Katalysatoren.

Von allen Polyhydroxy-Verbindungen wird die OH-Zahl (OHZ) experimentell ermittelt und aus der OHZ das OH-Val-Verhältnis errechnet. Dieses Äquivalentgewicht ist dann die Basis für das Val-Verhältnis zu den einbasigen Fettsäuren.

Die Polyhydroxyverbindungen werden mit den Fettsäuren, wie Stearinsäure, bei hohen Temperaturen mittels Katalysatoren, wie Zinn-dibutylmaleat, Zinn-dibutyldilaurat, unter Stickstofatmosphäre kondensiert.

Der Ester wird gewöhnlich nach der Kondensation filtriert und nicht gebleicht. Er kannt aber, wenn erforderlich, mit 1-5 Gew.-% Bleicherde gebleicht werden. Bei sorgfältiger Reaktionsführung erhält man aber meistens farblich befriedigende Produkte, die einer Bleichung nicht mehr bedürfen.

In den Beispielen 1-3 wird die Herstellung einiger in den Tabellen charakterisierter Ester beschrieben.

B) Spezielle Produkte

Iod-FZ = Iodfarbzahl
OHZ = OH-Zahl
SZ = Säurezahl
VZ = Verseifungszahl

### Beispiel 1

Herstellung von Ester-Nr. 12 aus Tabelle 2

2 310 g (8,4 Mol) Stearinsäure
576 g (12 Val) Triglycerin (aus Glycerin und 2 Mol Glycidol)
2,9 g Sn-dibutylmaleat

werden in einem 4 l Dreihals-Rührkolben mit Destillationsbrücke unter Stickstoffatmosphäre und Rühren 27 Stunden bei 188 °C kondensiert.

Ausbeute : 2 728 g
Destillat : 150 g

Man erhält nach der Filtration ein helles Festprodukt.

Fp : 52-53,5 °C
Iod-FZ : 7
OHZ : 72,5
SZ : 0,3
VZ : 175,0

Beispiel 2

Herstellung von Ester-Nr. 18 aus Tabelle 2

1 960 g (7 Mol) Ölsäure Siegert Olein weiß
520 g (10 Val) Polyglycerin aus Selbstkondensation von Glycerin, Val = 52
2,5 g Sn-dibutylmaleat

werden in einem 4 l Dreihals-Rührkolben mit Destillationsbrücke unter Stickstoffatmosphäre und Rühren 20 Stunden bei 201 °C kondensiert.

Ausbeute : 2 345 g
Destillat : 133 g

Das Produkt wird durch eine Drucknutsche (Filter K3) filtriert. Wir erhalten eine helle, klare Flüssigkeit.

Iod-FZ : 9
OHZ : 75,0
SZ : 0,3
VZ : 172,0

Beispiel 3

Herstellung von Ester-Nr. 22 aus Tabelle 3

2 200 g (8 Mol) Stearinsäure
432 g (10 Val) Polykondensat aus Trimethylolpropan-Pentaerythrit im Molverhältnis 1 : 4

werden in einem 4 l Dreihals-Rührkolben mit Destillationsbrücke unter Stickstoffatmosphäre und Rühren 24 Stunden bei 185 °C kondensiert.

Ausbeute : 2 477 g
Destillat : 137 g

FP : 57-58 °C
Iod-FZ : 6
OHZ : 47,0
SZ : 0,7
VZ : 185,5

In ähnlicher Weise werden die übrigen in den Tabellen angegebenen Ester hergestellt.

(Siehe Tabelle 1 Seite 5 ff.)

Tabelle 1

Ester aus Stearinsäure (ss) und Trimethylolpropan (TMP) mit n Mol Glycidol

| Ester | Einsatzstoffe | Val.-Verh. | Reaktions-bedingungen | OHZ | SZ | VZ | Iod-FZ | Fp |
|---|---|---|---|---|---|---|---|---|
| 1 | (TMP+1 Glycidol)+ss* | 1:0,8 | 23 h bei 105°C | 41,0 | 0,9 | 176,0 | 4-5 | 38-39,5°C |
| 2 | " " | 1:0,6 | 23 h bei 105°C | 102,5 | 0,2 | 165,0 | 5 | 36-36,5°C |
| 3 | " " | 1:0,8 | 21 h bei 105°C | 45,0 | 3,4 | 173,0 | 4-5 | 42-43°C |
| 4 | " " | 1:0,6 | 21 h bei 105°C | 99,5 | 0,5 | 163,5 | 7 | 40-41°C |
| 5 | " " | 1:0,8 | 21 h bei 105°C | 49,5 | 1,1 | 172,5 | 5 | 44-46°C |
| 6 | " " | 1:0,5 | 21 h bei 105°C | 147,5 | 0,1 | 150,5 | 9 | 34-38°C |
| 7 | (TMP+4 Glycidol)+ss | 1:0,8 | 21 h bei 105°C | 50,5 | 4,8 | 171,0 | 4-5 | 46-46,5°C |
| 8 | " " | 1:0,6 | 21 h bei 105°C | 103 | 0,6 | 160,0 | 5 | 44-44,5°C |
| 9 | (TMP+6 Glycidol)+ss | 1:0,8 | 21 h bei 105°C | 70,0 | 9,0 | 166,9 | 5 | 43-45°C |
| 10 | " " | 1:0,5 | 21 h bei 105°C | 149,5 | 0,4 | 148,5 | 4 | 38-41°C |

* Stearinsäure

Tabelle 2

Ester aus Fettsäuren und Polyglycerinen

| Ester | Einsatzstoffe | Val-Verh. | Reaktions-bedingungen | OHZ | SZ | VZ | Iod-FZ | Fp |
|---|---|---|---|---|---|---|---|---|
| 11 | Polyglycerin (n=3)+ss | 1:0,8 | 21 h bei 185°C | 53,5 | 5,1 | 182,0 | 4-5 | 52,5-53,5°C |
| 12 | " " | 1:0,7 | 27 h bei 185°C | 72,5 | 0,3 | 175,0 | 7 | 52-53,5°C |
| 13 | " " | 1:0,6 | 22 h bei 185°C | 102,0 | 0,5 | 168,5 | 4-5 | 54-54,5°C |
| 14 | Polyglycerin (n=6)+ss | 1:0,8 | 22 h bei 185°C | 61,5 | 15,8 | 173,0 | 4-5 | 54-55°C |
| 15 | " " | 1:0,7 | 22 h bei 185°C | 99,5 | 0,8 | 162,5 | 4-5 | 54-55°C |
| 16 | Polyglycerin (n=3-4)+ss | 1:0,8 | 24h bei 185-190°C | 63,0 | 6,0 | 176,5 | 6 | 53-55°C |
| 17 | " " | 1:0,7 | 19 h bei 185°C | 84,0 | 1,9 | 172,5 | 6 | 53-55°C |
| 18 | Polyglycerin (n=3-4) + Ölsäure | 1:0,7 | 20 h bei 201°C | 75,0 | 0,3 | 172,0 | 9 | flüssig |
| 19 | Polyglycerin (n=3-4) + Laurinsäure | 1:0,7 | 24h bei 202-210°C | 104,0 | 1,1 | 223,0 | 6 | flüssig |
| 20 | Polyglycerin (n=3-4) + Behensäure | 1:0,7 | 20 h bei 201°C | 64,0 | 0,5 | 148,0 | 7 | 67-69°C |
| 21 | Polyglycerin (n=3-4) + Talgfettsäure | 1:0,7 | 21 h bei 202°C | 73,0 | 0,2 | 176,0 | 12 | pastös |

Tabelle 3

Ester aus Stearinsäure und Trimethylolpropan-/Pentaerythrit (Penta)-Gemischen im angegebenen Mol-Verhältnis

| Ester | Einsatzstoffe | Val-Verh. | Reaktionsbedingungen | OHZ | SZ | VZ | Iod-FZ | Fp |
|---|---|---|---|---|---|---|---|---|
| | Poly-TMP-Penta = 1:4 (Val 43,2) + SS | | | | | | | |
| 22 | | 1:0,8 | 24 h bei 185 °C | 47,0 | 0,7 | 185,5 | 6 | 57-58 °C |
| 23 | " " | 1:0,7 | 24 h bei 185 °C | 80,5 | 0,5 | 182,5 | 7 | 48-50 °C |

C) Anwendungsbeispiele

Aufgrund des relativ breiten Anwendungsgebietes ergeben sich eine Reihe von Prüfmöglichkeiten. Einige im folgenden aufgeführten Beispiele sollen das unterschiedliche Verfahren in verschiedenen PVC-Rezepturen demonstrieren.

Beispiel 4

Ester Nr. 20 aus Tabelle 2:

Die äußere Gleitwirkung wurde durch Messung von Plastifiziereigenschaften im Vergleich zu einem Montanesterwachs bestimmt. Das dafür verwendete plastographische Drehmomentmeßgerät der Fa. Brabender OHG ist vom Typ « Plasti-Corder PLE 330 ».

Die zur Prüfung verwendete Grundmischung weist folgende Zusammensetzung auf

100 Teile Suspensions-PVC (K-Wert 60)
2 Teile Ba/Cd-Stabilisator
0,5 Teile Co-Stabilisator auf Basis eines Epoxyöls
0,5 Teile inneres Gleitmittel (Glyzerinmonooleat).

Dieser Grundmischung werden jeweils 0,4, 0,8 und 1,2 phr des zu prüfenden Esters zugemischt und in die Knetkammer des Plastographen gefüllt.

Der Plastograph läßt sich durch folgende Größen definieren:

Einfüllmenge: 30 g
Bad-Temperatur: 160 °C
Drehzahl (konst.): 40 Upm
Auflagegewicht: 5 kg

Die Ba/Cd-stabilisierte Grundmischung (d. h. ohne Gleitmittel) weist eine max.-Drehmoment von 71 Nm, ein Enddrehmoment von 44 Nm, eine Plastifizierzeit von 45 s sowie eine Massetemperatur von 196 °C auf.

Demgegenüber bewirkt der Ester No. 20 eine Reduzierung des maximalen Drehmomentes
auf 57 Nm bei 0,4 phr Gleitmittelzusatz
auf 50 Nm bei 0,8 phr Gleitmittelzusatz
auf 39 Nm bei 1,2 phr Gleitmittelzusatz.

Auch des Enddrehmoment wird sehr deutlich herabgesetzt, so bewirkt ein Gleitmittelzusatz
von 0,4 phr ein Enddrehmoment von 35 Nm
von 0,8 phr ein Enddrehmoment von 35,4 Nm
von 1,2 phr ein Enddrehmoment von 34 Nm.

In der gleichen Konzentrationsreihe wird eine Verzögerung der Plastifizierzeit erreicht, die
bei 0,4 phr einer Zeit von 1,5 min
bei 0,8 phr einer Zeit von 4 min
bei 1,2 phr einer Zeit von 6,5 min
entspricht.

Die Massetemperatur wird dabei von 196 °C über 194 °C auf 191 °C (in der obengenannten Konzentrationsreihe) erniedrigt.

Alle diese Meßergebnisse weisen darauf hin, daß Ester Nr. 20 als ein gutes, äußerlich wirkendes Gleitmittel einzustufen ist.

Weitere erfindungsgemäße Ester wurden unter diesen Bedingungen geprüft. Die Ergebnisse sind in der Tabelle 4 zusammengestellt.

Tabelle 4

| Beispiel (aus Tabelle 1-3) | Farbzahl | Fp | Zusatzgleitmittel | Max. Drehmoment | Plastographische Mischung (H-PVC Ba/Cd-stab.) Enddrehmoment | Plastifizierzeit | Massetemperatur |
|---|---|---|---|---|---|---|---|
| Grundmischung | - | - | - | 71 Nm | 44 Nm | 45 s | 196 °C |
| Montanesterwachs | 20-25 | 78 °C | 0,4 phr | 60 Nm | 35 Nm | 1 min | 194 °C |
| | | | 0,8 phr | 50 Nm | 35 Nm | 2 min | 194 °C |
| | | | 1,2 phr | 44 Nm | 34,5 Nm | 3,5 min | 193 °C |
| Ester Nr. 1 | 4-5 | 38-40 °C | 0,4 phr | 62 Nm | 35 Nm | 1 min | 194 °C |
| | | | 0,8 phr | 56 Nm | 35 Nm | 1,75 min | 194 °C |
| | | | 1,2 phr | 49 Nm | 34,5 Nm | 2,75 min | 192 °C |
| Ester Nr. 5 | 5 | 44-46 °C | 0,4 phr | 61 Nm | 35,5 Nm | 1,5 min | 196 °C |
| | | | 0,8 phr | 51 Nm | 35 Nm | 2,5 min | 196 °C |
| | | | 1,2 phr | 38,5 Nm | 34 Nm | 9 min | 190 °C |
| Ester Nr. 9 | 5 | 43-45 °C | 0,4 phr | 63 Nm | 35 Nm | 1 min | 196 °C |
| | | | 0,8 phr | 44 Nm | 34,5 Nm | 6,5 min | 196 °C |
| | | | 1,2 phr | 37,5 Nm | 34 Nm | 10 min | 190 °C |
| Ester Nr. 14 | 4-5 | 54-55 °C | 0,4 phr | 56 Nm | 33,5 Nm | 1,5 min | 195 °C |
| | | | 0,8 phr | 39,5 Nm | 33,5 Nm | 6,5 min | 194 °C |
| | | | 1,2 phr | 36 Nm | 33 Nm | 7,5 min | 190 °C |
| Ester Nr. 18 | 9 | flüssig | 0,4 phr | 63 Nm | 34,5 Nm | 1 min | 196 °C |
| | | | 0,8 phr | 58 Nm | 34 Nm | 1,5 min | 194 °C |
| | | | 1,2 phr | 51 Nm | 33,5 Nm | 2,75 min | 193 °C |
| Ester Nr. 20 | 7 | 67-69 °C | 0,4 phr | 57,5 Nm | 35 Nm | 1,5 min | 196 °C |
| | | | 0,8 phr | 50 Nm | 34,5 Nm | 4 min | 194 °C |
| | | | 1,2 phr | 39 Nm | 34 Nm | 6,5 min | 191 °C |

Beispiel 5

Eine weitere Prüfung erfolgt in einer Hart-PVC-Rezeptur.

Zusammensetzung der Grundmischung :
100 Teile Emulsions-PVC K-Wert 78
0,35 Teile Diphenylharnstoff

Bevor auf einem praxisnahen Kalander ein größerer Versuch durchgeführt wurde, führten wir folgende orientierende Vorversuche durch.

Zur obengenannten Grundmischung werden 3,5 phr von Ester Nr. 5 gemäß Tabelle 1 zugemischt, gewalzt und zu 1 mm dicken Preßplättchen verarbeitet. Gemesse wurde die Transparenz (z. B. durch ein Lichtdurchlässigkeitsmeßgerät) und mit einem Plättchen verglichen, welches mit der gleichen Menge Montanesterwachs hergestellt werden war. Im vorliegenden Beispiel weist das Plättchen eine Transparenz von 56 % auf ; das mit dem Montanesterwachs dagegen 58 %, d. h. die Verträglichkeit des Esters ist etwas geringer gebenüber dem Montanesterwachs.

Eine weitere Prüfung umfaßt die plastographische Messung der praxisnahen Folienrezeptur bei einem Gleitmittelzusatz von 3,5 phr. Gemessen wurden auch hier die durch die Viskositätsbeeinflussung sich ändernden maximalen Drehmomente sowie die Plastifizierzeiten.

Für den Ester Nr. 5 wurde ein max. Drehmoment von 56 Nm (Montanesterwachs 57,5 Nm) und eine Plastifizierzeit von 85 s (Montanesterwachs 60 s) gemessen.

Beide Ergebnisse, d. h. die aus der Transparenzmessung und die aus dem Plastifizierverhalten stimmen überein in der Aussage, daß Ester Nr. 5 etwas stärker äußerlich wirkt als Montanesterwachse.

Die entscheidene Prüfung ist aber die Verarbeitung des Gleitmittels auf einer betrieblichen Kalanderstraße, wo das gesamte Verhalten geprüft wird. In Tabelle 5 sind analog dem Beispiel 5 erhaltene Prüfergebnisse für eine Reihe von Estern zusammengetragen. In der mittleren Spalte ist die Beschaffenheit der Kalanderfolie des Betriebsversuches aufgeführt. Ester Nr. 5 zeichnet sich gegenüber Montanesterwachs durch eine geringere Zahl von Streifen aus, d. h. es entstehen keine Fließnähte ; Glanz und Transparenz sind ebenfalls als gut zu bezeichnen.

(Siehe Tabelle 5 Seite 10 f.)

Tabelle 5

(in Hart-PVC stabilisiert mit Diphenylthioharnstoff)

| Beispiel (aus Tabelle 1-3) | Transparenz 1 mm Preßplatte | Beschaffenheit Kalanderfolie | Plastographische Messung Zusatz Gleitmittel | maximales Drehmoment | Plastifizierzeit |
|---|---|---|---|---|---|
| Montanesterwachs | 58 % | gut, geringe Zahl Streifen glänzend | 3,5 phr | 57,5 Nm | 1 min |
| Ester Nr. 4 | 56 % | gut, keine Streifen glänzend | 3,5 phr | 60 Nm | 45 s |
| Ester Nr. 5 | 56,5 % | gut, keine Streifen glänzend | 3,5 phr | 56 Nm | 85 s |
| Ester Nr. 20 | 52 % | gut, keine Streifen, etwas trüber, glänzend | 3,5 phr | 56 Nm | 90 s |

**Patentansprüche**

1. Gleitmittel für die formgebende Verarbeitung von Polyvinylchlorid, enthaltend Ester der Formel I.

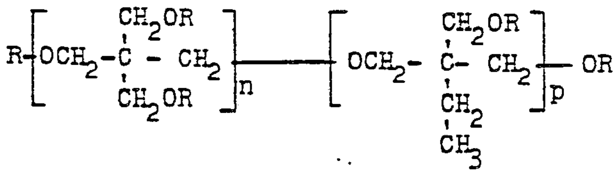

(I)

in der n die Zahlen 2 bis 4 und p 1 bis 3 bedeuten oder der Formel II

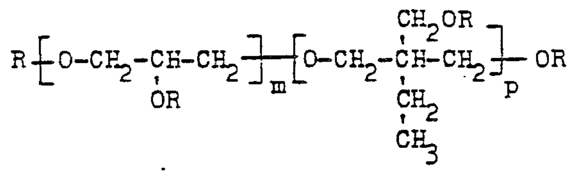

(II)

in der p die Zahl 1 und m 1, 4 oder 6 bedeuten und in denen R für Wasserstoff und für

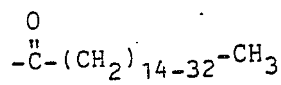

steht, wobei der Veresterungsgrad 50 bis 80 % beträgt und die Monomereinheiten blockweise oder statistisch verteilt im Molekül eingebaut sind.

2. Verwendung von Estern der Formel I

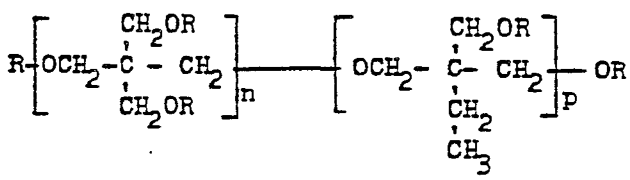

(I)

in der n die Zahlen 2 bis 4 und p 1 bis 3 bedeuten, der Formel II

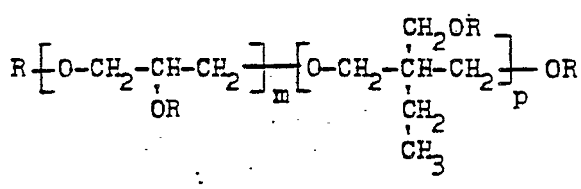

(II)

in der p die Zahl 1 und m 1, 4 oder 6 bedeuten, oder der Formel III

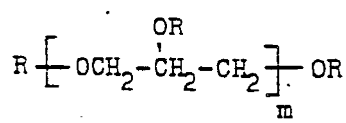

(III)

in der m die Zahlen 3 bis 10 bedeutet und in denen R für Wasserstoff und für

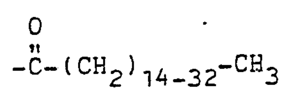

steht, wobei der Veresterungsgrad 50 bis 80 % beträgt und die Monomereinheiten blockweise oder statistisch verteilt im Molekül eingebaut sind, als äußeres Gleitmittel bei der formgebenden Verarbeitung von Polyvinylchlorid.

**Claims**

1. A lubricant for shaping polyvinyl chloride, which contains esters of the formula I

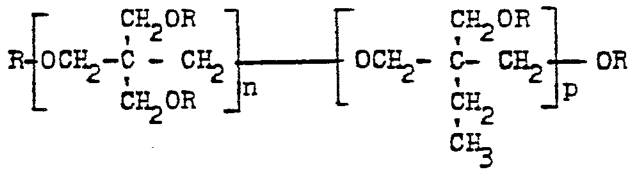 (I)

where n is from 2 to 4, and p is from 1 to 3, or of the formula II

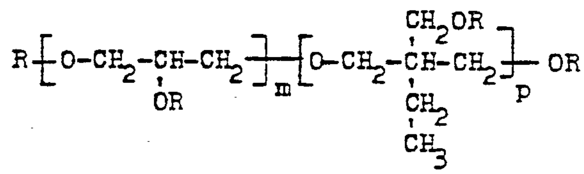 (II)

where p is 1, and m is 1, 4 or 6, and in which formulae R is hydrogen and

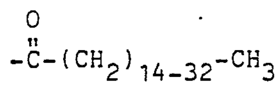

the degree of esterification being from 50 to 80 %, and the molecule containing the monomer units in blocks or in random distribution.

2. The use of an ester of the formula I

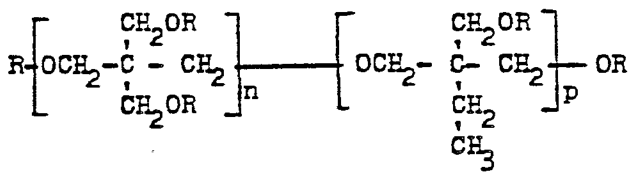 (I)

where n is from 2 to 4, and p is from 1 to 3, or of the formula II

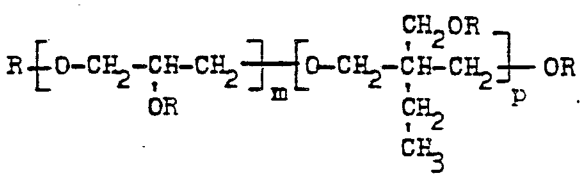 (II)

where p is 1, and m is 1, 4 or 6, or of the formula III

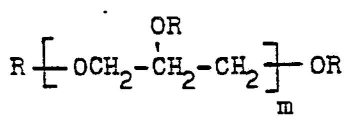 (III)

where m is from 3 to 10, and in which formulae R is hydrogen and

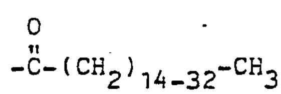

the degree of esterification being from 50 to 80 %, and the molecule containing the monomer units in blocks or in random distribution, as outer lubricant in the shaping of polyvinyl chloride.

**Revendications**

1. Lubrifiants pour le formage du poly(chlorure de vinyle), contenant des esters de la formule I

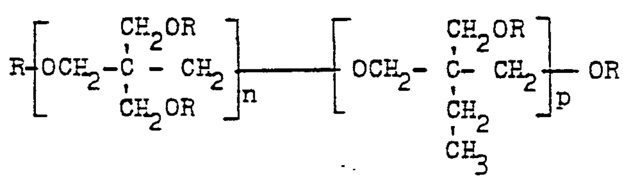 (I)

dans laquelle n est un nombre de 2 à 4 et p vaut 1 à 3, ou de la formule II

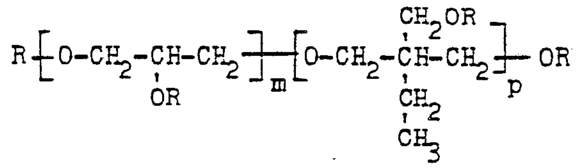

(II)

dans laquelle p vaut 1 et m vaut 1, 4 ou 6, et dans lesquelles R désigne un atome d'hydrogène ou un groupe de la formule

$$-\overset{\overset{O}{\|}}{C}-(CH_2)_{14-32}-CH_3$$

dont le degré d'estérification est compris entre 50 et 80 % et dans lesquels les unités monomères sont disposées en blocs ou réparties de façon stochastique dans la molécule.

2. Utilisation d'esters de la formule I

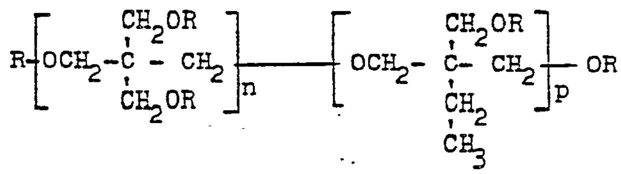

(I)

dans laquelle n est un nombre de 2 à 4 et p vaut 1 à 3, ou de la formule II

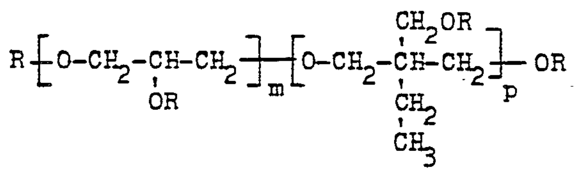

(II)

dans laquelle p vaut 1 et m vaut 1, 4 ou 6, ou de la formule III

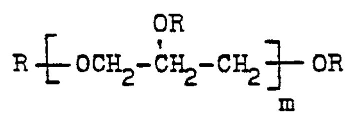

(III)

dans laquelle m est un nombre de 3 à 10, et dans lesquelles R désigne un atome d'hydrogène ou un groupe de la formule

$$-\overset{\overset{O}{\|}}{C}-(CH_2)_{14-32}-CH_3$$

dont le degré d'estérification est compris entre 50 et 80 % et dans lesquels les unités monomères sont disposées en blocs ou réparties de façon stochastique dans la molécule, comme lubrifiants externes lors du formage du poly(chlorure de vinyle).